(19) Europäisches Patentamt
European Patent Office
Office européen des brevets

(11) **EP 2 409 396 B1**

(12) **EUROPÄISCHE PATENTSCHRIFT**

(45) Veröffentlichungstag und Bekanntmachung des Hinweises auf die Patenterteilung:
**05.06.2013 Patentblatt 2013/23**

(21) Anmeldenummer: **10717037.5**

(22) Anmeldetag: **16.03.2010**

(51) Int Cl.:
*H02P 7/00* (2006.01)  *H02K 23/66* (2006.01)
*H02K 23/30* (2006.01)

(86) Internationale Anmeldenummer:
**PCT/EP2010/001635**

(87) Internationale Veröffentlichungsnummer:
**WO 2010/105795 (23.09.2010 Gazette 2010/38)**

(54) **KORREKTUR VON ZÄHLFEHLERN BEI DER AUSWERTUNG VON STROMRIPPELN BEI EINEM GLEICHSTROMMOTOR**

CORRECTION OF COUNTING ERRORS UPON EVALUATION OF CURRENT RIPPLES IN A DC MOTOR

CORRECTION DES ERREURS DE COMPTAGE DANS L'ANALYSE DES ONDULATIONS DE COURANT SUR UN MOTEUR À COURANT CONTINU

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.03.2009 DE 102009013062**

(43) Veröffentlichungstag der Anmeldung:
**25.01.2012 Patentblatt 2012/04**

(73) Patentinhaber: **Brose Fahrzeugteile GmbH & Co. Kommanditgesellschaft, Hallstadt**
**96103 Hallstadt (DE)**

(72) Erfinder:
• **KNEZEVIC, Jovan**
**96047 Bamberg (DE)**
• **UEBEL, Wolfgang**
**96479 Weitramsdorf (DE)**

(74) Vertreter: **Tschirwitz, Christian**
**FDST Patentanwälte**
**Nordostpark 16**
**90411 Nürnberg (DE)**

(56) Entgegenhaltungen:
**DE-A1- 4 135 873**      **DE-A1-102006 049 123**
**DE-U1-202004 010 211**   **US-A- 5 744 921**
**US-A1- 2006 138 982**

**Beschreibung**

Die Erfindung bezieht sich auf ein Verfahren zur Ermittlung einer Stellgröße eines mechanisch kommutierten Gleichstrommotors (Kommutatormotor). Die Erfindung bezieht sich weiterhin auf eine Vorrichtung zur Durchführung des Verfahrens sowie auf die Verwendung eines modifizierten Gleichstrommotors für ein solches Verfahren.

Kommutatormotoren werden häufig als Stellmotoren im Rahmen einer Stellvorrichtung für ein bzw. in einem Kraftfahrzeug eingesetzt. Bei solchen Stellvorrichtungen handelt es sich insbesondere um einen elektrischen Fensterheber, eine elektrische Sitzverstellung, einen elektrischen Tür- oder Schiebedachschließer, etc.

Bei diesen Stellvorrichtungen (Stellsystemen) ist eine präzise Kenntnis der momentanen Stellposition, des Verstellwegs und/oder der Stellgeschwindigkeit erforderlich, insbesondere um eine einzustellende Endposition eines Stellvorgangs präzise anfahren zu können sowie um Gefahrensituationen wie z.B. einen Einklemmfall rechtzeitig erkennen zu können. Die Stellposition und hieraus abgeleitete Größen wie die Stellgeschwindigkeit und der zurückgelegte Stellweg sind nachfolgend umfassend als "Stellgrößen" bezeichnet. Jede dieser Stellgrößen kann in äquivalenter Weise bezüglich des Motors, bezüglich des zu verstellenden Fahrzeugteils oder eines sonstigen, beim Stellvorgang bewegten Bestandteils der Stellvorrichtung definiert sein. Beispielsweise kann die Stellposition bei einem Fensterheber in äquivalenter Weise durch den Drehwinkel der Motorwelle oder die Fensterstellung angegeben werden. Analog hierzu kann die Stellgeschwindigkeit in äquivalenter Weise durch die Drehzahl der Motorwelle oder die Fahrgeschwindigkeit der Fensterscheibe angegeben werden, etc.

Bei sensorlos arbeitenden Verfahren - wie beispielsweise aus DE 10 2006 049 123 A1 bekannt - werden Stellgrößen der oben genannten Art üblicherweise durch Auszählung der Motorstromrippel ermittelt. Als (Motorstrom-) Rippel wird hierbei eine charakteristische Welligkeit (d.h. periodische, pulsartige Schwankungen) des Motorstroms bezeichnet, die durch die Kommutierung des Gleichstrommotors hervorgerufen wird.

Die Zählung der Stromrippel ist jedoch nicht in allen Phasen eines typischen Stellvorgangs fehlerfrei möglich. So gliedert sich ein typischer Stellvorgang in eine initiale Anfahrphase, eine Gleichgewichtsphase (steady state), eine Freilaufphase und eine abschließende Bremsphase.

Während der Anfahrphase schwingt sich die Motorgeschwindigkeit auf eine stabile Endgeschwindigkeit ein. In der anschließenden Gleichgewichtsphase sind diese Endgeschwindigkeit und damit auch die Frequenz der Stromrippel annähernd konstant.

Die Freilaufphase wird dadurch eingeleitet, dass zur Beendigung des Stellvorgangs beide Anschlüsse des Kommutatormotors auf Masse geschaltet werden. Die Freilaufphase erstreckt sich hierbei über die Dauer dieses Schaltvorgangs (typischerweise etwa 3 bis 4 msec). Aufgrund des Schaltvorgangs fließt in der Freilaufphase - bei im Wesentlichen unveränderter Stellgeschwindigkeit des Motors - kein oder ein nur äußerst irreproduzierbarer Motorstrom. Sobald beide Motorkontakte stabil auf Masse geschaltet sind, geht die Freilaufphase in die abschließende Bremsphase über. In der Bremsphase wird der über Masse kurzgeschlossene Elektromotor generatorisch betrieben und durch den so erzeugten Kreisstrom abgebremst.

Aufgrund des zusammenbrechenden Motorstroms ist die Auszählung der Stromrippel insbesondere in der Freilaufphase nicht möglich. In der Anfahr- und Bremsphase ist die Rippelzählung zwar grundsätzlich möglich, aber aufgrund vergleichsweise unregelmäßiger Stromverhältnisse mit einem erhöhten Fehlerrisiko behaftet.

Bei herkömmlichen Verfahren zur Rippelzählung kommt es daher üblicherweise insbesondere in der Freilaufphase, in geringerem Umfang aber auch in der Anfahrphase und der Bremsphase zu Zählfehlern bei der Rippelzählung. Solche Zählfehler entstehen vorwiegend dadurch, dass Stromrippel im Stromsignal nicht erkannt werden und somit quasi "verloren gehen". Ferner können Zählfehler aber auch dadurch entstehen, dass extern hervorgerufene Störungen des Motorstromverlaufs fälschlicherweise als Stromrippel identifiziert werden. Beide Arten von Zählfehlern führen zu Fehlern bei der Bestimmung der Stellgrößen. Insbesondere bei der Berechnung der Stellposition können sich diese Fehler ungünstigerweise im Laufe von mehreren aufeinanderfolgenden Stellvorgängen summieren, und somit die Funktion der Stellvorrichtung unter Umständen erheblich beeinträchtigen.

Aus DE 20 2004 010 211 U1 ist ein Verfahren bekannt, bei dem zur Korrektur von Zählfehlern bei der Rippelzählung zunächst eine Mustererkennung vorgenommen wird, im Zuge welcher charakteristische Amplitudenunterschiede der aufeinanderfolgenden Rippel innerhalb eines Motorzyklus identifiziert werden. Durch diese Identifikation der einzelnen Rippel im Motorzyklus können somit "verlorene" oder fälschlich identifizierte Rippel erkannt und das Zählergebnis entsprechend korrigiert werden. In DE 20 2004 010 211 U1 ist ferner vorgeschlagen, parallel zu der Rippelzählung die Motorposition auch mittels eines elektromechanischen Motormodells zu ermitteln.

Aus DE 41 35 873 C2 ist weiterhin bekannt, durch Modifikation eines Kommutatormotors ein - innerhalb eines Motorzyklus - unregelmäßiges Rippelmuster zu erzeugen, um anhand des Rippelmusters nicht lediglich die Verstellposition bzw. den Verstellweg oder die Verstellgeschwindigkeit, sondern auch die Verstellrichtung erkennen zu können.

Der Erfindung liegt die Aufgabe zugrunde, ein einfach realisierbares und fehlersicheres Verfahren zur Bestimmung einer Stellgröße, insbesondere der Verstellposition bzw. Verstellgeschwindigkeit eines Kommutatormotors durch Auszählung von Motorstromrippeln anzugeben. Das Verfahren soll insbesondere eine einfach realisierbare und fehlersichere Korrektur von Fehlern der Rippelzählung ermöglichen. Der Erfindung liegt weiterhin die Aufgabe zugrunde, eine zur Durchführung des Verfahrens besonders geeignete Vorrichtung anzugeben.

Diese Aufgabe wird bezüglich des Verfahrens erfindungsgemäß gelöst durch die Merkmale des Anspruchs 1. Verfahrensgemäß wird im Rahmen der Stellvorrichtung ein mechanisch kommutierter (Gleichstrom-)Motor eingesetzt, der durch entsprechende mechanische bzw. elektromechanische Modifikation ein Normrippelmuster aufweist, das pro Motorzyklus oder Motorhalbzyklus mindestens einen hinsichtlich Amplitude, Dauer und/oder zeitlicher Stellung ausgezeichneten (d.h. deutlich von der Mehrheit der übrigen Rippel des Motorzyklus oder -halbzyklus abweichenden) Indexrippel umfasst. Im Betrieb dieses Motors wird aus dem gemessenen Motorstrom und der gemessenen Motorspannung mittels eines Motormodells die gegen-elektromotorische Kraft (auch als Back Electromagnetic Force, kurz: b-EMF, oder als Gegeninduktionsspannung bezeichnet) berechnet. Aus der b-EMF wird ein den Stromrippeln entsprechender Wechselanteil extrahiert. Aus diesem Wechselanteil der b-EMF werden die Stromrippel, insbesondere die Zeitpunkte und Amplituden derselben, erkannt.

Verfahrensgemäß wird nun in mindestens einem, bevorzugt in jedem Motorzyklus bzw. -halbzyklus der Indexrippel anhand seiner vorbekannten Auszeichnungsmerkmale (d.h. abweichenden Eigenschaften) identifiziert. Zudem werden die insgesamt identifizierten Stromrippel gezählt. Das Zählergebnis, bei dem es sich um ein Maß für die zu ermittelnde Stellgröße oder deren Änderung handelt, wird hierbei um eine entsprechende Anzahl von Zähleinheiten korrigiert, wenn der Indexrippel nicht an der erwarteten Position, sondern an einer gegenüber dieser verschobenen Position identifiziert (gezählt) wird.

Als "Normrippelmuster" wird dasjenige Rippelmuster bezeichnet, das der Motor aufgrund seiner baulichen Eigenart im stationären, störungsfreien Betrieb aufweist. Als "Motorzyklus" ist allgemein der einer Volldrehung der Motorwelle entsprechende Abschnitt eines Motorsignals, insbesondere des Motorstroms, der b-EMF oder des Rippelmusters, bezeichnet. Als "(Motor-)Halbzyklus" ist entsprechend der einer Halbdrehung der Motorwelle entsprechende Abschnitt des jeweiligen Motorsignals bezeichnet. Das Normrippelmuster wiederholt sich periodisch mit jedem Motorzyklus bzw. -halbzyklus. Hierdurch erscheint auch der oder jeder Indexrippel in vielfacher periodischer Wiederholung. Insbesondere enthält auf diese Weise jeder Motorzyklus bzw. -halbzyklus eine "Signatur", d.h. wiederholte Erscheinung des Indexrippels.

Die Anzahl der insgesamt im Normrippelmuster pro Motorzyklus bzw. -halbzyklus enthaltenen Stromrippel inklusive des Indexrippels ist nachfolgend als "Zyklusrippelzahl" ($N_Z$) bezeichnet.

Bei dem verfahrensgemäß verwendeten "Motormodell" handelt es sich um eine mathematische Formel, insbesondere der Form

$$E = U_m - R_a \cdot I_a - L_a \cdot \frac{dI_a}{dt} \,, \qquad \text{Glg. 1}$$

bzw. um ein eine solche Formel implementierendes Schaltungs- oder Programmodul. In Glg. 1 bezeichnen

- E die in Einheiten einer elektrischen Spannung gemessene gegen-elektromotorische Kraft (b-EMF),
- Um die an den Motorkontakten anliegende Motorspannung,
- $R_a$ den ohmsche Motorwiderstand,
- $I_a$ den zwischen den Motorkontakten fließenden elektrischen Motorstrom, genauer die Stromstärke desselben, und
- $L_a$ die Induktivität des Motors.

Bei den Größen E, Um und $I_a$ handelt es sich um zeitabhängige Messgrößen, d.h. um Funktionen der Zeit. Bei den Größen $R_a$ und $L_a$ handelt es sich um Gerätekonstanten des Kommutatormotors.

Das erfindungsgemäße Verfahren hat insbesondere den Vorteil, dass infolge der Motormodifikation die abweichenden Eigenschaften des Indexrippels von vornherein bekannt und somit für die Verfahrensdurchführung vorgegeben sind. Die Identifizierung des Indexrippels ist somit besonders einfach. In zweckmäßiger Ausführung erfolgt sie beispielsweise anhand vorgegebener Schwellwerte für die Amplitude des Indexrippels und/oder den zeitlichen Abstand des Indexrippels zum vorausgehenden oder folgenden Rippel. Eine numerisch aufwändige Echtzeit-Mustererkennung ist hierzu überflüssig und somit insbesondere auch nicht vorgesehen. Infolge der Extraktion der Stromrippel aus der mittels des Motormodells berechneten b-EMF (und nicht direkt aus dem Motorstrom) wird das Zählergebnis dabei gleichzeitig nicht, oder zumindest nur in sehr geringem Maße durch Störungen der Versorgungsspannung beeinflusst. Eine Verfälschung des Zählergebnisses durch solche Störungen ist somit von vornherein weitestgehend ausgeschlossen.

In einer numerisch besonders unaufwändigen Verfahrensvariante wird die Korrektur lediglich einmal pro Stellvorgang, insbesondere nach Beendigung des Stellvorgangs, durchgeführt. In einer besonders präzisen, numerisch allerdings aufwändigeren Alternatiwariante des Verfahrens wird die Korrektur bei jeder Identifizierung des Indexrippels durchgeführt. Etwaige Zählfehler werden hierdurch quasi in Echtzeit bei jeder Motordrehung oder sogar -halbdrehung berichtigt.

Für eine bevorzugte Verfahrensvariante wird ein Motor herangezogen, der derart modifiziert ist, dass sein Normrippelmuster genau (d.h. lediglich) einen Indexrippel pro Motorzyklus bzw. -halbzyklus aufweist. In dieser Verfahrensvariante wird die Anzahl der Stromrippel zwischen zwei aufeinanderfolgenden Signaturen des Indexrippels bestimmt. Diese Anzahl ist nachfolgend als "Intervallrippelzahl" ($N_I$) bezeichnet. Die Signaturen des Indexrippels werden hierbei definitionsgemäß bei der Bestimmung der Intervallrippelzahl nicht mitgezählt. Die so bestimmte Intervallrippelzahl muss in Abwesenheit von Zählfehlern erkanntermaßen der um eine Zähleinheit erniedrigten Zyklusrippelzahl entsprechen, d.h.

$$N_I = N_Z - 1, \hspace{6cm} \text{Glg. 2}$$

Dies wird verfahrensgemäß zur Erkennung und Korrektur von Zählfehlern genutzt, indem das als Maß für die Stellgröße oder deren Änderung ermittelte Zählergebnis

- um eine Zähleinheit nach oben korrigiert, d.h. erhöht wird, wenn die Intervallrippelzahl der um zwei Zähleinheiten erniedrigten Zyklusrippelzahl entspricht ($N_I = N_Z - 2$), und
- um eine Zähleinheit nach unten korrigiert, d.h. erniedrigt wird, wenn die Intervallrippelzahl der Zyklusrippelzahl entspricht ($N_I = N_Z$).

In einer bevorzugten Ausführung weist der Motor vier Stromrippel pro Motorzyklus bzw. -halbzyklus auf ($N_Z = 4$), und hiervon lediglich einen Indexrippel auf. In diesem Fall wird das Zählergebnis also

- um eine Zähleinheit nach oben korrigiert, wenn zwischen zwei aufeinanderfolgenden Signaturen des Indexrippels nur zwei Zählstellen liegen, und
- um eine Zähleinheit nach unten korrigiert, wenn zwischen zwei aufeinanderfolgenden Signaturen des Indexrippels vier Zählstellen liegen.

Selbstverständlich kann die "Intervallrippelzahl" bei der vorstehend beschriebenen Verfahrensvariante in alternativer Definition auch unter Mitzählung einer oder beider Signaturen des Indexrippels bestimmt werden. In diesem Fall sind die vorstehenden Bedingungen entsprechend anzupassen.

In einer weiteren Verfahrensvariante wird als "Intervallrippelzahl" allgemein die Anzahl der Stromrippel zwischen der in einem früheren Motorzyklus bzw. - halbzyklus identifizierten Signatur des Indexrippels und der in einem späteren Motorzyklus bzw. -halbzyklus identifizierten Signatur des Indexrippel bestimmt. Der frühere und spätere Motorzyklus bzw. -halbzyklus sind hierbei grundsätzlich beliebig wählbar. In bevorzugter Ausgestaltung werden aber als früherer Motorzyklus bzw. -halbzyklus der erste Motorzyklus bzw. -halbzyklus, und als späterer Motorzyklus bzw. -halbzyklus der letzte Motorzyklus eines Stellvorgangs gewählt. Definitionsgemäß wird hierbei zur Bestimmung der Intervallrippelzahl die Signatur des Indexrippels im späteren Motorzyklus bzw. -halbzyklus hinzugezählt.

Die so definierte Intervallrippelzahl muss erkanntermaßen - in Abwesenheit von Zählfehlern - stets der Zyklusrippelzahl oder einem ganzen Vielfachen hiervon entsprechen. Mit anderen Worten muss der Nachkommaanteil ($V_{NK}$) des Verhältnisses der Intervallrippelzahl zu der Zyklusrippelzahl in Abwesenheit von Zählfehlern stets den Wert Null haben, während ein von Null verschiedener Nachkommaanteil dieses Verhältnisses auf einen Zählfehler hindeutet.

In bevorzugter Ausgestaltung des Verfahrens wird nun das als Maß für die Stellgröße oder deren Änderung ermittelte Zählergebnis um das Produkt des Nachkommaanteils und der Zyklusrippelzahl ($V_{NK} \cdot N_Z$) nach oben korrigiert, d.h. erhöht, wenn der besagte Nachkommaanteil mindestens 0,5 beträgt. Ist der Nachkommaanteil dagegen größer als 0, aber kleiner 0,5, so wird dieses Zählergebnis um das Produkt des Nachkommaanteils und der Zyklusrippelzahl nach unten korrigiert, d.h. erniedrigt.

Bei vier Stromrippeln pro Motorzyklus bzw. Halbzyklus ($N_Z = 4$) hat der Nachkommaanteil des vorstehend definierten Verhältnisses insbesondere stets

- den Wert 0,75 oder 0,5, wenn ein bzw. zwei Stromrippel nicht mitgezählt wurden, so dass in diesem Fall das Zählergebnis um die entsprechende Anzahl von Zähleinheiten erhöht wird, und
- den Wert 0,25, wenn ein Stromrippel zuviel gezählt wurde, so dass in diesem Fall das Zählergebnis um eine Zähleinheit erniedrigt wird.

Zusätzlich zu der vorstehend beschriebenen Zählfehlerkorrektur wird in einer bevorzugten Verfahrensvariante das als Maß für die Stellgröße oder deren Änderung ermittelte Zählergebnis während der Freilaufphase eines jeden Stellvorgangs durch - lineare oder nicht-lineare - Extrapolation anhand der vor und/oder nach der Freilaufphase identifizierten Stromrippel angepasst.

Die obige Aufgabe wird auch gelöst durch eine Vorrichtung mit den Merkmalen des Anspruchs 7. Diese Vorrichtung umfasst eine Steuereinheit (insbesondere in Form eines Mikrocontrollers), in der das vorstehend beschriebene Verfahren (insbesondere softwaretechnisch) implementiert ist.

Die Aufgabe wird darüber hinaus auch durch die Merkmale des Anspruchs 9 gelöst, nämlich durch die Verwendung eines zur Erzeugung eines Rippelmusters mit einem ausgezeichneten Indexrippel modifizierten Kommutatormotors zur Korrektur von Zählfehlern bei der Ermittlung einer Stellgröße des Motors durch Auszählung von Stromrippeln, insbesondere im Rahmen des vorstehend beschriebenen Verfahrens.

Bevorzugt wird der Motor derart modifiziert, dass in seinem Rippelmuster auf den ausgezeichneten Indexrippel mindestens zwei hiervon deutlich unterscheidbare "gewöhnliche" Rippel folgen und/oder dass dem ausgezeichneten Indexrippel mindestens zwei hiervon deutlich unterscheidbare "gewöhnliche" Rippel vorangehen. Bei vier Rippel pro Halbzyklus wird ein Rippelmuster mit einem einzigen ausgezeichneten Indexrippel ("1") und drei "gewöhnlichen" Rippeln ("0") bevorzugt:

1:0:0:0

Der Motor umfasst bevorzugt eine von mehreren Läuferspulen mit reduzierter oder erhöhter Wicklungszahl. Bei vier Läuferspulen haben diese insbesondere ein Windungszahlverhältnis von 23:25:25:25. In einer weiteren, bevorzugten Ausführungsform ist der Motor mit acht Läuferspulen bewickelt, die ein Windungszahlverhältnis von 26:24:25: 25:27:26:25:25 aufweisen. Der Kommutatormotor kann im Rahmen der Erfindung aber grundsätzlich auch auf jede der in DE 41 35 873 C2 weiterhin beschriebenen Arten modifiziert sein.

Nachfolgend werden Ausführungsbeispiele der Erfindung anhand einer Zeichnung näher erläutert. Darin zeigen:

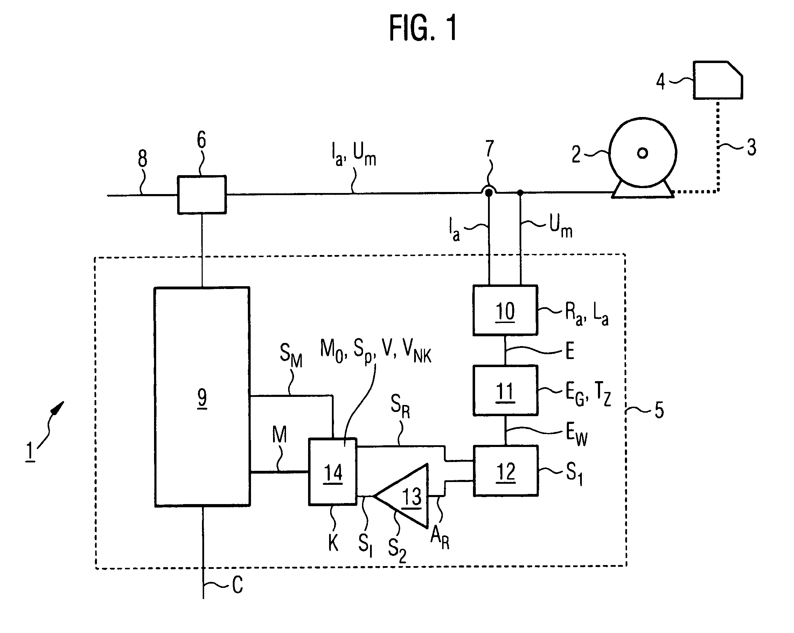

Fig. 1 in einem schematischen Blockschaltbild eine Stellvorrichtung für ein Kraftfahrzeug, mit einem mechanisch kommutierten Gleichstrommotor sowie mit einer Steuereinheit zur Ansteuerung des Motors, die dazu eingerichtet ist, eine Motorstellung durch Auszählung der Stromrippel des Motorstroms zu bestimmen und hierbei etwaige Zählfehler automatisch zu korrigieren,

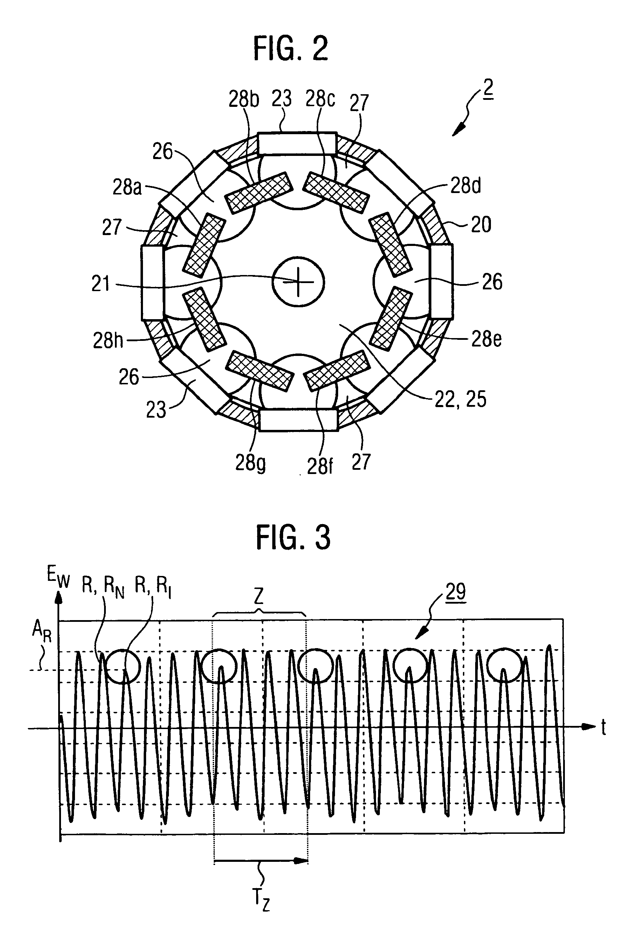

Fig. 2 in schematischer Darstellung den Ständer und den Läufer des Gleichstrommotors,

Fig. 3 in einem schematischen Diagramm eines Wechselanteils der gegen-elektromotorischen Kraft (b-EMF) gegen die Zeit ein Normrippelmuster des Gleichstrommotors, das infolge einer elektromechanischen Modifikation des Gleichstrommotors, nämlich einer gebrochenen Ankerwicklung, pro Motorhalbzyklus einen hinsichtlich seiner Amplitude ausgezeichneten Indexrippel und drei weitere, nicht ausgezeichnete Stromrippel umfasst,

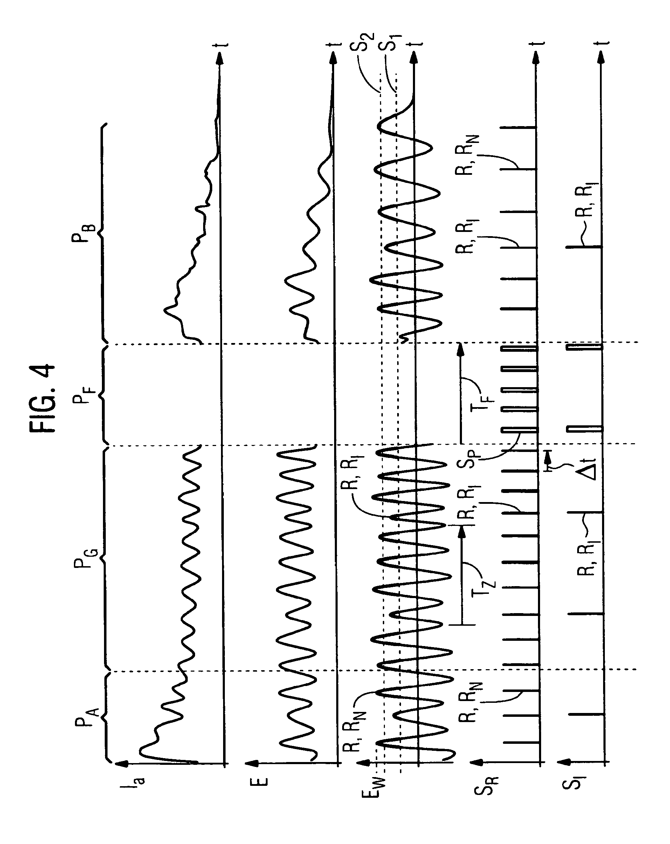

Fig. 4 in vier übereinander angeordneten synchronen Diagrammen gegen die Zeit schematisch vereinfacht den Motorstrom des Gleichstrommotors während eines Stellvorgangs, die aus dem Motorstrom abgeleitete b-EMF, einen Wechselanteil der b-EMF, Stromrippelerkennungssignale, die die durch Auswertung dieses Wechselanteils erkannten Stromrippel anzeigen, bzw. Indexrippelerkennungssignale, die die durch Auswertung des Wechselanteils erkannten Indexrippel anzeigen.

Einander entsprechende Teile und Größen sind in allen Figuren stets mit gleichen Bezugszeichen versehen.

Bei der in Fig. 1 schematisch dargestellten Stellvorrichtung 1 handelt es sich beispielhaft um einen elektrischen Fensterheber, wie er üblicherweise in einem Personenkraftfahrzeug eingesetzt wird. Die Stellvorrichtung 1 umfasst einen mechanisch kommutierten (Gleichstrom-)Motor 2, der über eine (lediglich angedeutete) Stellmechanik 3 auf eine (Kraftfahrzeug-)Fensterscheibe 4 wirkt und diese reversibel zwischen einer Öffnungsstellung und einer Schließstellung verstellt.

Die Stellvorrichtung 1 umfasst weiterhin eine Steuereinheit 5, einen Motorschalter 6 sowie einen Stromsensor 7.

Der Stromschalter 6 ist in eine (zweiphasige) Stromversorgungsleitung 8 für den Motor 2 geschaltet. Er umfasst zwei unabhängig ansteuerbare Einzelschalter, durch deren Schaltstellung beide Motoranschlüsse wahlweise mit dem Pluspol oder dem Minuspol (Masse) der Stromversorgungsleitung 8 verbunden werden können. Durch entsprechende Stellung der Einzelschalter des Motorschalters 6 kann somit der Motor 2 in jeder seiner beiden Laufrichtungen an- und ausgeschaltet sowie zur Umkehrung der Laufrichtung umgepolt werden.

Bei dem Stromsensor 7 handelt es sich insbesondere um einen Messwiderstand, über dem eine stromproportionale Spannung als Messsignal für den in der Stromversorgungsleitung 8 fließenden Motorstrom $I_a$ abgreifbar ist. Dieses Messsignal ist vereinfachend im Folgenden ebenfalls als "Motorstrom $I_a$" bezeichnet, zumal es ein Maß für die Stärke des letzeren darstellt. Der Stromsensor 7 führt in diesem Sinne den Motorstrom $I_a$, genauer das für den Motorstrom $I_a$ charakteristische Messsignal der Steuereinheit 5 als Eingangsgröße zu. Als weitere Eingangsgröße ist der Steuereinheit 5 die in der Stromversorgungsleitung 8 anliegende Motorspannung Um zugeführt.

Die Steuereinheit 5 dient zur Steuerung des Motors 2 durch entsprechende Betätigung des Motorschalters 6.

Sie umfasst hierzu ein Schaltmodul 9, das in Abhängigkeit externer Steuerbefehle C sowie in Abhängigkeit eines Motorstellungssignals M den Motorschalter 6 betätigt. Bei dem Motorstellungssignal M handelt es sich um eine - grundsätzlich beliebig definierbar - Stellgröße, aus der die Position der Fensterscheibe 4 ableitbar ist. Das Motorstellungssignal M kann hierbei insbesondere als Drehwinkel des Motors 2 (in Einheiten des Winkelmaßes) definiert sein. In bevorzugter Ausbildung der Vorrichtung 1 wird das Motorstellungssignal M aber als dimensionslose Zahl erzeugt, die sich in nachfolgend näher beschriebener Weise aus der Auszählung von Stromrippeln R (Fig. 3 und 4) des Motorstroms $I_a$ ergibt. Die Steuereinheit 5 ist dabei dazu eingerichtet, etwaige Zählfehler bei der Auszählung der Stromrippel R automatisch zu korrigieren.

Zur Bestimmung des Motorstellungssignals M inklusive der Zählfehlerkorrektur umfasst die Steuereinheit 5 ein so genanntes Motormodell 10, einen (Wechselanteils-)Filter 11, ein (Stromrippel-)Erkennungsmodul 12, ein (Indexrippel-)Erkennungsmodul 13 und ein Auswertungsmodul 14.

Die Steuereinheit 5 ist in bevorzugter Ausbildung der Stellvorrichtung 1 durch einen Mikrocontroller gebildet. Das Schaltmodul 9, das Motormodell 10, der Filter 11 und die Module 12 bis 14 sind hierbei insbesondere in Form von Software-Bausteinen, d.h. funktionalen Bestandteilen einer in dem Mikrocontroller implementierten Software realisiert. Alternativ kann die Steuereinheit 5 aber auch als analoge und/oder digitale elektrische Schaltung realisiert sein, wobei das Schaltmodul 9, das Motormodell 10, der Filter 11 und die Module 12 bis 14 in Form von elektrischen Schaltkreisen realisiert sind. Des Weiteren sind Mischformen denkbar, bei denen die Bestandteile der Steuereinheit 5 teils schaltungstechnisch, und andernteils softwaretechnisch realisiert sind.

Die vorstehend vorgenommene Gliederung der Bestandteile der Steuereinheit 5 hat zudem lediglich funktionalen Charakter. Diese Bestandteile können insbesondere beliebig zu größeren Schaltungs- oder Programmeinheiten zusammengefasst oder noch feiner untergliedert sein.

In dem Motormodell 10 ist - programm- oder schaltungstechnisch - eine mathematische Formel der in Glg. 1 angegebenen Form implementiert, durch die die eingangs bereits eingeführte gegen-elektromotorische Kraft (b-EMF) E als Funktion des Motorstroms $I_a$ und der Motorspannung Um berechenbar ist. Der Motorstrom $I_a$ und die Motorspannung Um sind dem Motormodell 10 als Eingangsgrößen zugeführt. Die Parameter des Motormodells 10, nämlich der ohmsche (Motor)Widerstand $R_a$, und die (Motor-)Induktivität $L_a$ sind dem Motormodell 10 als Konstanten vorgegeben. Die nach Glg. 1 berechnete elektromotorische Kraft E wird von dem Motormodell 10 an den nachgeschalteten Filter 11 abgegeben.

Der zeitabhängige variierende Wert der b-EMF E setzt sich additiv zusammen aus einem zeitlich nicht oder nur schwach veränderlichen Gleichanteil $E_G$ und einem zeitlich schnell veränderlichen Wechselanteil $E_W$:

$$E_W = E - E_G \qquad\qquad \text{Glg. 3}$$

Als zeitlich nicht oder schwach veränderlich wird hierbei insbesondere derjenige Anteil der b-EMF E definiert, der sich auf der typischen Zeitskala eines (Motor)Halbzyklus Z (Fig. 3) nicht signifikant ändert. In programmtechnischer Ausbildung ist der Filter 11 vorzugsweise durch einen Algorithmus gebildet, der den Gleichanteil $E_G$ durch zeitlich gleitende Mittelwertbildung über die b-EMF E für die Dauer eines Halbzyklus Z (Halbzyklusdauer $T_Z$) ermittelt, insbesondere gemäß

$$E_G = \frac{1}{T_Z} \cdot \int_{T_Z} E \cdot dt \,, \qquad\qquad \text{Glg. 4}$$

und der den Wechselanteil $E_W$ nach Glg. 3 durch Substraktion des Gleichanteils $E_G$ von der b-EMF E berechnet. Den ermittelten Wechselanteil $E_W$ leitet der Filter 11 an das Stromrippelerkennungsmodul 12 weiter.

Die Halbzyklusdauer $T_Z$ kann hierbei von der Steuereinheit 5 aus der zeitlichen Änderung des Motorstellungssignals M berechnet und dem Filter 11 mit jeweils aktuellem Betrag zugeführt werden. In aus der Einfachheit halber bevorzugter Ausbildung ist die Halbzyklusdauer $T_Z$ dem Filter 11 aber als Konstante fest vorgegeben. Diese Konstante ist hierbei insbesondere derart gewählt, dass ihr Wert der durchschnittlichen Halbzyklusdauer $T_Z$ des Motors 2 in dessen stationärem Betrieb entspricht.

In schaltungstechnischer Ausbildung kann der Filter 11 alternativ als Hochpass ausgebildet sein.

Erkanntermaßen äußern sich Stromrippel R des Motorstroms $I_a$ in einer mit diesem synchronen Oszillation der b-EMF E, und insbesondere deren Wechselanteil $E_W$. Das Erkennungsmodul 12 ist deshalb daher ausgebildet, Maxima im zeitlichen Verlauf des Wechselanteils $E_W$ als Indiz für das Auftreten eines Stromrippels R zu erkennen. Um eine Fehlerkennung von Stromrinppeln R durch hochfrequente Störungen im Verlauf des Wechselanteils $E_W$ bestmöglich zu vermeiden, wird der Wechselanteil $E_W$ vor der Maximalwertsuche optional geglättet. Zusätzlich oder alternativ hierzu berücksichtigt das Erkennungsmodul 12 zu dem gleichen Zweck bei der Maximalwertsuche ausschließlich Werte des Wechselanteils $E_W$, die einen vorgegebenen, vergleichsweise niedrig angesetzten Schwellwert $S_1$ überschreiten. Der Wechselanteil $E_W$ wird somit in eine Anzahl von getrennten zeitlichen Sequenzen zerteilt, für die Bedingung $E_W > S_1$ erfüllt ist (in Fig. 4 sind diese Sequenzen durch dickere Strichbreite hervorgehoben), wobei das Erkennungsmodul 12 innerhalb jeder dieser Sequenzen das globale Maximum des Wechselanteils $E_W$ ermittelt.

Bei Erkennung eines jeden Maximums im Wechselanteil $E_W$ gibt das Erkennungsmodul 12 ein Rippelerkennungssignal $S_R$ an das Auswertungsmodul 14 ab. Zudem ermittelt das Erkennungsmodul 12 den Betrag des Wechselanteils $E_W$ an der Stelle des Maximums und übermittelt diesen Betrag als Rippelamplitude $A_R$ an das Indexrippelerkennungsmodul 13.

Das Erkennungsmodul 13 vergleicht die Rippelamplitude $A_R$ mit einem vorgegebenen zweiten Schwellwert $S_2$ und gibt ein Indexrippelerkennungssignal $S_I$ an das Auswertungsmodul 14 ab, wenn die Rippelamplitude $A_R$ den Schwellwert $S_2$ unterschreitet. Anhand der Rippelerkennungssignale $S_R$, der Indexrippelerkennungssignale $S_I$ sowie eines von dem Schaltmodul 9 zugeführten Motorstatussignals $S_M$ bestimmt das Auswertungsmodul 14 dann auf nachstehend näher beschriebene Weise das Motorstellungssignal M.

Das Motorstatussignal $S_M$ hat hierbei den Wert +1, solange der Motor 2 in einer ersten Laufrichtung betrieben wird, und den Wert -1, solange der Motor 2 in der entgegengesetzten Laufrichtung betrieben wird. Bei ausgeschaltetem Motor 2 hat das Motorstatussignal $S_M$ dagegen den Wert 0.

Wie aus Fig. 2 hervorgeht, umfasst der Motor 2 einen Ständer 20 und einen in diesem um eine Motorachse 21 rotierbar gelagerten Läufer 22. Der Ständer 20 besteht aus einem im Wesentlichen hohlzylindrischen Blechpaket mit acht um dessen Innenumfang gleichmäßig verteilten Permanentmagneten 23. Der Läufer 21 umfasst in an sich herkömmlicher Technik einen im Querschnitt etwa sternförmigen Eisenkern 25 mit acht umfänglich gleich verteilt eingebrachten Nuten 26. Zwischen je zwei benachbarten Nuten 26 ist hierbei ein Zahn 27 gebildet. Jeder der acht Zähne 27 ist mit jeweils einer - im Betrieb des Motors 2 vom Motorstrom $I_a$ durchflossenen - Ankerspule 28a-28h bewickelt. Im Unterschied zu einem gewöhnlichen Gleichstrommotor ist der Motor 2 mit einer gebrochenen Ankerwicklung versehen, d.h. die Ankerspulen 28a-28h haben eine ungleiche Windungszahl. In dem in Fig. 2 dargestellten Beispiel haben

- die Spule 28a die Windungszahl 26,
- die Spule 28b die Windungszahl 24,
- die Spulen 28c und 28d jeweils die Windungszahl 25,
- die Spule 28e die Windungszahl 27,
- die Spule 28f die Windungszahl 26, und
- die Spulen 28g und 28h jeweils die Windungszahl 25.

Durch die solchermaßen gebrochene Ankerwicklung wird im ungestörten, statischen Betrieb des Motors 2 ein Normrippelmuster 29 erzeugt, das in Fig. 3 anhand des zeitlichen Verlaufs des Wechselanteils $E_W$ der b-EMF E dargestellt ist. Aus der Fig. 3 ist erkennbar, dass das Normrippelmuster 29 jeweils insgesamt vier Stromrippel R pro Halbzyklus Z, also pro 180°-Drehung des Läufers 23, aufweist. Die Anzahl der Stromrippel R pro Halbzyklus Z ist nachfolgend als "Zyklusrippelzahl $N_Z$" (hier: $N_Z = 4$) bezeichnet. Drei Stromrippel R innerhalb jedes Halbzyklus Z weisen hierbei - entsprechend des jeweiligen Maximalwerts des Wechselanteils $E_W$ - eine zumindest näherungsweise gleiche Rippelamplitude $A_R$ auf. Diese Stromrippel R sind nachfolgend auch als "nicht ausgezeichnete" Stromrippel $R_N$ bezeichnet. Der in jedem Halbzyklus Z verbleibende vierte Stromrippel R - in Fig. 3 durch Kreise optisch hervorgehoben - weist dagegen jeweils eine im Vergleich zu den übrigen Stromrippeln R signifikant erniedrigte Rippelamplitude $A_R$ auf. Dieser (kleinere) Stromrippel R ist somit gegenüber den Stromrippel $R_N$ ausgezeichnet und ist nachfolgend als Indexrippel $R_I$ bezeichnet. Wie aus Fig. 3 erkennbar, wiederholt sich das Normrippelmuster 29 im ungestörten stationären Betrieb des Motors 2 mit jedem Halbzyklus Z.

Fig. 4 zeigt - schematisch vereinfacht - den Verlauf

- des Motorstroms $I_a$,
- der b-EMF E,
- des Wechselanteils $E_W$ der b-EMF E,
- des Rippelerkennungssignals $S_R$ und
- des Indexrippelerkennungssignals $S_I$

gegen die Zeit t während eines typischen Stellvorgangs. Aus der Darstellung ist dabei insbesondere erkennbar, dass sich der Stellvorgang in die eingangs beschriebenen vier Phasen gliedert, nämlich die initiale Anfahrphase $P_A$, die Gleichgewichtsphase $P_G$, die Freilaufphase $P_F$ und die abschließende Bremsphase $P_B$.

Während der Anfahrphase $P_A$, der Gleichgewichtsphase $P_G$ und der Bremsphase $P_B$ erhöht (inkrementiert) oder erniedrigt (dekrementiert) das Auswertungsmodul 14 den Wert des Motorstellungssignals M mit jedem empfangenen Rippelerkennungssignal $S_R$ um eine Zähleinheit, nämlich um den Wert 1. Die Rippelerkennungssignale $S_R$ wirken somit als Zählpulse für die Inkrementierung bzw. Dekrementierung des Motorstellungssignals M. Das Auswertungsmodul 14 geht dabei von einem Anfangswert $M_0$ aus, aus dem die Motorstellung und die Fensterstellung zu Beginn des Stellvorgangs ableitbar sind. Das Vorzeichen des Motorstatussignals $S_M$ entscheidet hierüber, ob das Motorstellungssignal M inkrementiert oder dekrementiert wird. Das Motorstellungssignal M wird somit während des Betriebs des Motors 2 in der ersten Laufrichtung inkrementiert, und während des Betriebs des Motors 2 in der entgegengesetzten Laufrichtung dekrementiert:

$$M = \sum_{S_R} S_M + M_0 \qquad \text{mit} \quad S_M = \pm 1 \qquad\qquad \text{Glg. 5}$$

Bei dem in Fig. 4 beispielhaft dargestellten Stellvorgang erhöht das Auswertungsmodul 14 also - zunächst ohne Berücksichtigung der Freilaufphase $P_F$ - das Motorstellungssignal M somit um den Differenzbetrag 19.

Da während der Freilaufphase $P_F$ der Motorstrom $I_a$ zusammenbricht oder zumindest ein sehr irreproduzierbares Verhalten zeigt, können während der Freilaufphase $P_F$ durch das Erkennungsmodul 12 keine Stromrippel R erkannt werden.

Um das Motorstellungssignal M dennoch auch in der Freilaufphase $P_F$ der tatsächlichen Motorstellung nachführen zu können, ergänzt das Auswertungsmodul 14 daher die während der Freilaufphase $P_F$ nicht gezählten Stromrippel durch Extrapolation anhand der zeitlichen Abfolge der Stromrippel R vor Beginn der Freilaufphase $P_F$.

In besonders einfacher Ausführung bestimmt das Auswertungsmodul 14 hierzu die Zeitspanne $\Delta t$ der beiden letzten Stromrippel R vor Beginn der Freilaufphase $P_F$ und erzeugt während der Freilaufphase F jeweils nach erneutem Ablauf dieser Zeitspanne $\Delta t$ einen Sonderzählimpuls $S_P$, aufgrund dessen anstelle der Rippelerkennungssignale $S_R$ das Motorstellungssignal M inkrementiert oder dekrementiert wird:

$$M = \sum_{S_P} S_M + M_0 \qquad \text{mit} \quad S_M = \pm 1 \qquad\qquad \text{Glg. 6}$$

Durch die beschriebene Extrapolation der Stromrippel während der Freilaufphase $P_F$ erhöht die Auswertungseinheit 14 bei dem in Fig. 4 dargestellten Stellvorgang das Motorstellungssignal M beispielhaft insgesamt um den Betrag 24.

Trotz der beschriebenen Extrapolation der Stromrippel während der Freilaufphase $P_F$ kann es vorkommen, dass - insbesondere am Übergang zwischen den Phasen $P_G$, $P_F$ und $P_B$, Zählfehler durch nicht identifizierte Stromrippel R oder fälschlich identifizierte Stromrippel entstehen. Gemäß Fig. 4 erfolgt ein solcher Zählfehler beispielhaft beim Übergang zwischen der Freilaufphase $P_F$ und der Bremsphase $P_B$, zumal dort zwischen zwei Indexrippeln $R_I$ lediglich zwei anstelle von drei nicht ausgezeichneten Stromrippeln $R_N$ erkannt werden.

Etwaige Zählfehler dieser Art werden durch das Auswertungsmodul 14 unter Heranziehung des Indexrippelerkennungssignals $S_I$ in einem nachfolgend näher beschriebenen Korrekturschritt berichtigt.

In einer ersten Ausführung des Korrekturschritts zählt das Auswertungsmodul 14 für die Zählfehlerkorrektur während des Stellvorgangs parallel zu der Anpassung des Motorstellungssignals M fortlaufend die Anzahl der Stromrippelerkennungssignale $S_R$, die es zeitlich zwischen zwei aufeinanderfolgenden Indexrippelerkennungssignalen $S_I$ empfängt. Stromrippelerkennungssignale $S_R$, die gleichzeitig mit einem Indexrippelerkennungssignal $S_I$ empfangen werden, zählt das Auswertungsmodul 14 hierbei nicht mit. Das nachfolgend als Intervallrippelzahl $N_I$ bezeichnete Ergebnis dieser Zählung spiegelt somit die Anzahl der zwischen zwei aufeinanderfolgenden Signaturen des Indexrippels $R_I$ erkannten (nicht ausgezeichneten) Stromrippel $R_N$ wieder.

Der Korrekturschritt beruht auf der Erkenntnis, dass in Abwesenheit eines Zählfehlers jeweils drei nicht ausgezeichnete Stromrippel $R_N$ zwischen zwei aufeinanderfolgenden Signaturen des Indexrippels $R_I$ erkannt werden müssen. Entsprechend unterlässt das Auswertungsmodul 14 die Korrektur immer dann, wenn die Intervallrippelzahl $N_I$ den Wert 3 hat.

Wird ein (nicht ausgezeichneter) Stromrippel $R_N$ fälschlicherweise nicht erkannt, so zählt das Auswertungsmodul 14 zwischen zwei aufeinanderfolgenden Indexrippelerkennungssignalen $S_I$ lediglich zwei Stromrippelerkennungssignale $S_R$ ($N_I = 2$). Wird dagegen ein Stromrippel fälschlicherweise erkannt, so zählt das Auswertungsmodul 14 zwischen zwei aufeinanderfolgenden Indexrippelerkennungssignalen $S_I$ vier Stromrippelerkennungssignale $S_R$ ($N_I = 4$).

In dem Fall, dass ein Indexrippel $R_I$ nicht erkannt oder fälschlicherweise als nichtausgezeichneter Stromrippel $R_N$ erkannt wird, zählt das Auswertungsmodul 14 zwischen zwei aufeinanderfolgenden Indexrippelerkennungssignalen $S_I$ sechs bzw. sieben Stromrippelerkennungssignale $S_R$ ($N_I = 6$ bzw. $N_I = 7$). In letzterem Fall besteht allerdings kein Korrekturbedarf, da die Anzahl der insgesamt erkannten Stromrippel R in diesem Fall korrekt erfasst wird.

Für die Zählfehlerkorrektur erzeugt das Auswertungsmodul 14 entsprechend einen Korrekturwert K mit dem Wert

- $K = 0$, wenn $N_I = N_Z - 1 = 3$
- $K = +1$, wenn $N_I = N_Z - 2 = 2$
- $K = +2$, wenn $N_I = N_Z - 3 = 1$
- $K = -1$, wenn $N_I = N_Z = 4$
- $K = +1$, wenn $N_I = 2 \cdot (N_Z - 1) = 6$
- $K = 0$, wenn $N_I = 2 \cdot N_Z - 1 = 7$.

Die Intervallrippelzahl $N_I$ wird durch das Auswertungsmodul 14 mit jedem empfangenen Indexrippelerkennungssignal $S_I$ erneut ausgewertet und anschließend auf Null zurückgesetzt. Das Auswertungsmodul 14 ändert hierbei mit jedem Indexrippelerkennungssignal $S_I$ das Motorstellungssignal M um den Korrekturwert:

$$M \rightarrow M + S_M \cdot K \qquad\qquad \text{Glg. 7}$$

Das Motorstellungssignal M wird also regelmäßig nach jedem Halbzyklus Z korrigiert, sofern ein Zählfehler aufgetreten ist.

In einer alternativen Ausführungsform des Korrekturschritts zählt das Auswertungsmodul 14 als Intervallrippelzahl $N_I$ die Anzahl der Stromrippel R, die zwischen dem ersten während des Stellvorgangs empfangenen Rippelerkennungssignal $S_I$ und dem letzten während des Stellvorgangs erkannten Indexrippelerkennungssignals $S_I$ empfangen werden. Das zeitgleich mit dem letzten Indexrippelerkennungssignal $S_I$ des Stellvorgangs empfangene Rippelerkennungssignal $S_R$ wird hierbei zur Vereinfachung der numerischen Auswertung mitgezählt. Außerdem zählt das Auswertungsmodul 14 bei der Bestimmung der Intervallrippelzahl $N_I$ in diesem Fall auch die während der Freilaufphase $P_F$ erzeugten Sonderzählimpulse $S_P$ mit.

Für die Zählfehlerkorrektur bildet das Auswertungsmodul 14 hierbei zunächst das Verhältnis V der so bestimmten Intervallrippelzahl $N_I$ und der Zyklusrippelzahl $N_Z$ sowie den Nachkommaanteil $V_{NK}$ dieses Verhältnisses V.

Der Korrekturschritt beruht hier auf der Erkenntnis, dass in Abwesenheit eines Zählfehlers das Verhältnis V stets ganzzahlig sein muss. Der Nachkommaanteil $V_{NK}$ muss mit anderen Worten in Abwesenheit eines Zählfehlers den Wert Null haben.

Wird dagegen ein Stromrippel R fälschlicherweise nicht gezählt, so ergibt sich bei einer Zyklusrippelzahl $N_Z = 4$ stets ein Nachkommaanteil $V_{NK} = 0,75$. Insbesondere ermittelt das Auswertungsmodul 14 in dem in Fig. 4 dargestellten Beispiel bei einer Intervallrippelzahl $N_I = 19$ für das Verhältnis V

$$V = \frac{N_I}{N_Z} = \frac{19}{4} = 4,75 \qquad\qquad \text{Glg. 8}$$

mit Nachkommaanteil $V_{NK} = 0,75$.

Wird ein Stromrippel fälschlicherweise zu viel gezählt, so ergibt sich bei einer Zyklusrippelzahl $N_Z = 4$ entsprechend stets ein Nachkommaanteil $V_{NK} = 0,25$. Werden während eines Stellvorgangs zwei Stromrippel zu wenig oder zu viel gezählt, so hat der Nachkommaanteil $V_{NK}$ stets den Wert 0,5.

Entsprechend erzeugt das Auswertungsmodul 14 hier einen Korrekturwert K mit dem Wert

- $K = 0$, wenn $V_{NK} = 0$
- $K = +1$, wenn $V_{NK} = 0,75$,
- $K = -1$, wenn $V_{NK} = 0,25$, und
- $K = +2$, wenn $V_{NK} = 0,5$,

und passt das Motorstellungssignal M nach Glg. 7 an.

Insbesondere korrigiert das Auswertungsmodul 14 bei einem Nachkommaanteil $V_{NK} = 0,5$ die Anzahl der gezählten Stromrippel R stets nach oben, zumal erfahrungsgemäß die Wahrscheinlichkeit, dass während eines Stellvorgangs zwei Stromrippel R unerkannt bleiben, wesentlich höher ist als die Wahrscheinlichkeit, dass zwei Stromrippel R während eines Stellvorgangs zu viel gezählt werden.

Bezugszeichenliste

| | |
|---|---|
| 1 | Stellvorrichtung |
| 2 | (Gleichstrom-)Motor |
| 3 | Stellmechanik |
| 4 | (Kraftfahrzeug-)Fensterscheibe |
| 5 | Steuereinheit |
| 6 | Motorschalter |
| 7 | Stromsensor |
| 8 | Stromversorgungsleitung |
| 9 | Schaltmodul |
| 10 | Motormodell |
| 11 | (Wechselanteils-)Filter |
| 12 | (Stromrippel-)Erkennungsmodul |
| 13 | (Indexrippel-)Erkennungsmodul |
| 14 | Auswertungsmodul |
| 20 | Ständer |
| 21 | Motorachse |
| 22 | Läufer |
| 23 | Permanentmagnet |
| 25 | Eisenkern |
| 26 | Nut |
| 27 | Zahn |
| 28a-h | Ankerspule |
| 29 | Normrippelmuster |
| | |
| $\Delta t$ | Zeitspanne |
| $t$ | Zeit |
| $A_R$ | Rippelamplitude |
| $C$ | Steuerbefehl |
| $E$ | gegen-elektromotorische Kraft (b-EMF) |
| $E_G$ | Gleichanteil (der b-EMF) |
| $E_W$ | Wechselanteil (der b-EMF) |
| $I_a$ | Motorstrom |
| $K$ | Korrekturwert |
| $L_a$ | (Motor-)Induktivität |
| $M$ | Motorstellungssignal |
| $M_0$ | Anfangswert |
| $N_I$ | Intervallrippelzahl |
| $N_Z$ | Zyklusrippelzahl |
| $P_A$ | Anfahrphase |
| $P_B$ | Bremsphase |
| $P_F$ | Freilaufphase |
| $P_G$ | Gleichgewichtsphase |
| $R$ | Stromrippel |
| $R_a$ | (Motor-)Widerstand |
| $R_I$ | Indexrippel |
| $R_N$ | (nicht ausgezeichneter) Stromrippel |
| $S_1$ | Schwellwert |
| $S_2$ | Schwellwert |

(fortgesetzt)

| $S_M$ | Motorstatussignal |
|---|---|
| $S_I$ | Indexrippelerkennungssignal |
| $S_P$ | Sonderzählimpuls |
| $S_R$ | Rippelerkennungssignal |
| $T_F$ | Dauer (der Freilaufphase) |
| $T_Z$ | Halbzyklusdauer |
| Um | Motorspannung |
| V | Verhältnis |
| $V_{NK}$ | Nachkommaanteil |
| Z | (Motor-)Halbzyklus |

**Patentansprüche**

1. Verfahren zur Ermittlung einer Stellgröße, insbesondere der Motorstellung oder des Stellwegs, eines mechanisch kommutierten Gleichstrommotors (2) in einer Stellvorrichtung (1) für ein Kraftfahrzeug, wobei der Gleichstrommotor (2) infolge mechanischer oder elektromechanischer Modifikation ein Normrippelmuster (29) aufweist, das pro Motorzyklus oder Motorhalbzyklus (Z) mindestens einen hinsichtlich Amplitude ($A_R$), Dauer und/oder zeitlicher Stellung ausgezeichneten Indexrippel ($R_I$) umfasst, wobei verfahrensgemäß

   • im Betrieb des Gleichstrommotors (2) der Motorstrom ($I_a$) und die Motorspannung ($U_M$) gemessen werden,
   • aus dem gemessenen Motorstrom ($I_a$) und der gemessenen Motorspannung (Um) mittels eines Motormodells (10) die gegen-elektromotorische Kraft (E) berechnet wird,
   • aus der gegen-elektromotorischen Kraft (E) ein den Stromrippeln (R) entsprechender Wechselanteil ($E_W$) extrahiert wird,
   • aus diesem Wechselanteil ($E_W$) die Stromrippel (R) ermittelt werden,
   • in mindestens einem Motorzyklus bzw. -halbzyklus (Z) der Indexrippel ($R_I$) identifiziert wird,
   • die insgesamt identifizierten Stromrippel (R) als Maß für die Stellgröße oder eine Änderung derselben gezählt werden, und
   • das Zählergebnis (M) korrigiert wird, wenn der Indexrippel ($R_I$) nicht an der erwarteten Position gezählt wird.

2. Verfahren nach Anspruch 1,
   bei welchem die Korrektur bei jeder Erkennung des Indexrippels ($R_I$) durchgeführt wird.

3. Verfahren nach Anspruch 1,
   bei welchem die Korrektur genau einmal pro Stellvorgang durchgeführt wird.

4. Verfahren nach einem der Ansprüche 1 bis 3,

   ● bei welchem das Normrippelmuster (29) genau einen Indexrippel ($R_I$) pro Motorzyklus bzw. -halbzyklus (Z) aufweist,
   ● bei welchem als Intervallrippelzahl ($N_I$) die Anzahl der Stromrippel (R) zwischen zwei aufeinanderfolgenden Signaturen des Indexrippels ($R_I$) bestimmt wird,
   ● bei welchem das als Maß für die Stellgröße oder deren Änderung ermittelte Zählergebnis (M) um eine Zähleinheit nach oben korrigiert wird, wenn die Intervallrippelzahl ($N_I$) der um zwei Zähleinheiten erniedrigten Rippelzahl ($N_Z$) pro Motorzyklus bzw. -halbzyklus (Z) des Normrippelmusters (29) entspricht, und
   ● bei welchem dieses Zählergebnis (M) um eine Zähleinheit nach unten korrigiert wird, wenn die Intervallrippelzahl ($N_I$) der Rippelzahl ($N_Z$) pro Motorzyklus bzw. -halbzyklus (Z) des Normrippelmusters (29) entspricht.

5. Verfahren nach einem der Ansprüche 1 bis 3,

   • bei welchem das Normrippelmuster (29) genau einen Indexrippel ($R_I$) pro Motorzyklus bzw. -halbzyklus (Z) aufweist,
   • bei welchem als Intervallrippelzahl ($N_I$) die Anzahl der Stromrippel (R) zwischen der in einem früheren Motorzyklus bzw. -halbzyklus (Z) identifizierten Signatur des Indexrippels ($R_I$) und der in einem späteren Motorzyklus bzw. -halbzyklus (Z) identifizierten Signatur des Indexrippel ($R_I$) unter Hinzuzählung der letztgenannten Signatur des Indexrippels ($R_I$) bestimmt wird,

• wobei das als Maß für die Stellgröße oder deren Änderung ermittelte Zählergebnis (M) nach oben korrigiert wird, wenn der Nachkommaanteil ($V_{NK}$) des Verhältnisses (V) der Intervallrippelzahl ($N_I$) zu der Rippelzahl ($N_Z$) pro Motorzyklus bzw. -halbzyklus (Z) des Normrippelmusters (29) mindestens 0,5 beträgt, und

• bei welchem dieses Zählergebnis (M) nach unten korrigiert wird, wenn der besagte Nachkommaanteil ($V_{NK}$) größer als 0 und kleiner als 0,5 ist.

6. Verfahren nach einem der Ansprüche 1 bis 5,
wobei das als Maß für die Stellgröße oder deren Änderung ermittelte Zählergebnis (M) während der Freilaufphase ($P_F$) eines jeden Stellvorgangs durch Extrapolation anhand der vor und/oder nach der Freilaufphase ($P_F$) identifizierten Stromrippel (R) angepasst wird.

7. Stellvorrichtung (1) für ein Kraftfahrzeug, mit einem mechanisch kommutierten Gleichstrommotor (2), der durch mechanische oder elektromechanische Modifikation ein Normrippelmuster (29) aufweist, das pro Motorzyklus oder Motorhalbzyklus (Z) mindestens einen hinsichtlich Amplitude ($A_R$), Dauer und/oder zeitlicher Stellung ausgezeichneten Indexrippel ($R_I$) umfasst, sowie mit einer Steuereinheit (5) zur Ansteuerung des Gleichstrommotors (2), wobei die Steuereinheit (5) zur Ermittlung einer Stellgröße des Motors (2), insbesondere der Motorstellung oder des Stellwegs, nach dem Verfahren nach einem der Ansprüche 1 bis 5 eingerichtet ist.

8. Stellvorrichtung (1) nach Anspruch 7, wobei der Gleichstrommotor (2) ein Normrippelmuster (29) aufweist, das pro Motorzyklus bzw. -halbzyklus (Z) genau einen Indexrippel ($R_I$) sowie mindestens drei nicht ausgezeichnete Stromrippel ($R_N$) aufweist.

9. Verwendung eines mechanisch kommutierten Gleichstrommotors (2), der durch mechanische oder elektromechanische Modifikation ein Normrippelmuster (29) aufweist, das pro Motorzyklus oder Motorhalbzyklus (Z) mindestens einen hinsichtlich Amplitude ($A_R$), Dauer und/oder zeitlicher Stellung ausgezeichneten Indexrippel ($R_I$) umfasst, zur Korrektur von Zählfehlern bei der Ermittlung einer Stellgröße (M) des Gleichstrommotors (2) durch Auszählung von Stromrippeln (R), insbesondere nach dem Verfahren nach einem der Ansprüche 1 bis 6.

**Claims**

1. Method for determining an actuating variable, in particular the motor position or the positioning path, of a mechanically commutated DC motor (2) in a positioning device (1) for a motor vehicle, wherein the DC motor (2) has a standard ripple pattern (29) as a result of mechanical or electromechanical modification, which comprises at least one index ripple ($R_1$) in each motor cycle or motor half-cycle that is distinguished with respect to amplitude ($A_R$), duration and/or position in time, wherein, according to the method:

- the motor current ($I_a$) and the motor voltage ($U_M$) are measured during the operation of the DC motor (2),
- the counter-electromotivepower (E) is calculated from the measured motor current ($I_a$) and the measured motor voltage ($U_M$) by means of a motor model (10),
- an alternating element ($E_W$) corresponding to the current ripples (R) is extracted from the counter-electromotivepower (E),
- the current ripples (R) are determined from this alternating element ($E_W$),
- in at least one motor cycle or half cycle (Z), the index ripple ($R_1$) is identified,
- the total identified current ripples (R) are counted as a measure for the actuating variable or a change thereof, and
- the count result (M) is corrected when the index ripple ($R_1$) is not counted at the expected position.

2. Method according to claim 1,
wherein the correction is carried out with each identification of the index ripple ($R_1$).

3. Method according to claim 1,
wherein the correction is carried out exactly once per actuation process.

4. Method according to one of claims 1 to 3,

- wherein the standard ripple pattern (29) has exactly one index ripple ($R_1$) per motor cycle or half cycle (Z),

- wherein the number of current ripples (R) between two successive signatures of the index ripple (R$_1$) is determined as the interval ripple count (N$_1$),
- wherein the count result (M) determined as a measure for the actuating variable or a change thereto is correct upwards by one count unit, when the interval ripple count (N$_1$) corresponds to the ripple count (N$_Z$) per motor cycle or half cycle (Z) of the standard ripple pattern (29) that is decreased by two count units, and
- wherein this count result (M) is corrected downwards by one count unit when the interval ripple count (N$_1$) corresponds to the ripple count (N$_Z$) per motor cycle and half cycle (Z) of the standard ripple pattern (29).

5. Method according to one of claims 1 to 3,

   - wherein the standard ripple pattern (29) has exactly one index ripple (R$_1$) per motor cycle or half cycle (Z),
   - wherein the number of current ripples (R) between the signature of the index ripple (R$_1$) identified in an earlier motor cycle or half cycle (Z) and the signature of the index ripple (R) identified in a later motor cycle or half cycle (Z), including the counting of the latter signature of the index ripple (R$_1$), is determined as the interval ripple count (N$_1$),
   - wherein the count result (M) determined as a measure for the actuating variable or a change thereto is corrected upwards when the decimal portion (V$_{NK}$) of the ratio (V) of the interval ripple count (N$_1$) to the ripple count (N$_Z$) per motor cycle or half cycle (Z) of the standard ripple pattern (29) is at least 0.5, and
   - wherein this count result (M) is corrected downwards when said decimal portion (V$_{NK}$) is greater than 0 and smaller than 0.5.

6. Method according to one of claims 1 to 5, wherein the count result (M) determined as a measure for the actuating variable or the change thereto is adapted during the free-wheeling phase (P$_F$) of each actuation process by means of extrapolation using the current ripples (R) identified before and/or after the free-wheeling phase (P$_F$).

7. Positioning device (1) for a motor vehicle, having a mechanically commutated DC motor (2), which has a standard ripple pattern (29) as a result of mechanical or electromechanical modification, which comprises at least one index ripple (R$_1$) in each motor cycle or motor half-cycle that is distinguished with respect to amplitude (A$_R$), duration and/or position in time, as well as having a control unit (5) for controlling the DC motor (2), wherein the control unit (5) is configured to determine an actuating variable of the motor, in particular the motor position or the positioning path, according to the method according to one of claims 1 to 5.

8. Positioning device (1) according to claim 7, wherein the DC motor (2) has a standard ripple pattern (29) that has exactly one index ripple (R$_1$) and at least three non-distinguished current ripples (R$_N$) in each motor cycle or half cycle (Z).

9. Use of a mechanically commutated DC motor (2), which has a standard ripple pattern (29) as a result of mechanical or electromechanical modification, which comprises at least one index ripple (R$_1$) in each motor cycle or motor half-cycle that is distinguished with respect to amplitude (A$_R$), duration and/or position in time, for the correction of counting errors in determining an actuating variable (M) of the DC motor (2) by counting current ripples (R), in particular according to the method according to one of claims 1 to 6.

**Revendications**

1. Procédé pour déterminer une grandeur de réglage, notamment la position de moteur ou le déplacement de réglage, d'un moteur à courant continu (2) commuté mécaniquement, dans un dispositif de réglage (1) pour un véhicule automobile, le moteur à courant continu (2) présentant, suite à une modification mécanique ou électromécanique, un modèle d'ondulations normal (29), qui englobe, par cycle du moteur ou demi-cycle (Z) du moteur, au moins une ondulation indicielle (R$_I$) remarquable quant à l'amplitude (A$_R$), à la durée et/ou à la localisation temporelle, procédé d'après lequel

   • on mesure, lors du fonctionnement du moteur à courant continu (2), le courant (I$_a$) du moteur et la tension (U$_M$) du moteur,
   • à partir du courant (I$_a$) du moteur mesuré et de la tension (U$_M$) du moteur mesurée, on calcule, au moyen d'un modèle de moteur (10), la force contre-électromotrice (E),
   • à partir de la force contre-électromotrice (E), on extrait une fraction alternative (E$_W$) correspondant aux ondulations de courant (R),
• à partir de cette fraction alternative ($E_W$), on détermine les ondulations de courant (R),
• on identifie l'ondulation indicielle ($R_I$) dans au moins un cycle ou respectivement demi-cycle (Z) du moteur,
• on procède au comptage des ondulations de courant (R) identifiées au total, en tant que mesure pour la grandeur de réglage ou une variation de celle-ci, et
• on corrige le résultat de comptage (M) lorsque l'ondulation indicielle ($R_I$) n'est pas comptée à la position attendue.

2. Procédé selon la revendication 1,
d'après lequel on effectue la correction à chaque détection de l'ondulation indicielle ($R_I$).

3. Procédé selon la revendication 1,
d'après lequel on effectue la correction exactement une fois par opération de réglage.

4. Procédé selon l'une des revendications 1 à 3,

• d'après lequel le modèle d'ondulations normal (29) présente exactement une ondulation indicielle ($R_I$) par cycle ou respectivement demi-cycle (Z) du moteur,
• d'après lequel on définit en tant que nombre d'ondulations d'intervalle ($N_I$), le nombre d'ondulations de courant (R) entre deux signatures successives de l'ondulation indicielle ($R_I$),
• d'après lequel on corrige le résultat de comptage (M) déterminé en tant que mesure pour la grandeur de réglage ou sa variation, d'une unité de comptage vers le haut, lorsque le nombre d'ondulations d'intervalle ($N_I$) correspond au nombre d'ondulations ($N_Z$) par cycle ou respectivement demi-cycle (Z) du moteur, du modèle d'ondulations normal (29), diminué de deux unités de comptage, et
• d'après lequel ce résultat de comptage (M) est corrigé d'une unité de comptage vers le bas, lorsque le nombre d'ondulations d'intervalle (NI) correspond au nombre d'ondulations ($N_Z$) par cycle ou respectivement demi-cycle (Z) du moteur du modèle d'ondulations normal (29).

5. Procédé selon l'une des revendications 1 à 3,

• d'après lequel le modèle d'ondulations normal (29) présente exactement une ondulation indicielle ($R_I$) par cycle ou respectivement demi-cycle (Z) du moteur,
• d'après lequel on définit en tant que nombre d'ondulations d'intervalle ($N_I$), le nombre d'ondulations de courant (R) entre la signature identifiée de l'ondulation indicielle ($R_I$) dans un cycle ou respectivement demi-cycle (Z) antérieur du moteur et la signature identifiée de l'ondulation indicielle ($R_I$) dans un cycle ou respectivement demi-cycle (Z) postérieur du moteur, en rajoutant en plus la signature citée en dernier lieu de l'ondulation indicielle ($R_I$),
• le résultat de comptage (M), déterminé en tant que mesure pour la grandeur de réglage ou sa variation, étant corrigé vers le haut lorsque la partie décimale ($V_{NK}$) du rapport (V) du nombre d'ondulations d'intervalle ($N_I$) au nombre d'ondulations ($N_Z$) par cycle ou respectivement demi-cycle (Z) du moteur, du modèle d'ondulations normal (29), vaut au moins 0,5, et
• d'après lequel ce résultat de comptage (M) est corrigé vers le bas, lorsque ladite partie décimale ($V_{NK}$) est supérieure à 0 et inférieure à 0,5.

6. Procédé selon l'une des revendications 1 à 5, d'après lequel le résultat de comptage (M), déterminé en tant que mesure pour la grandeur de réglage ou sa variation, est adapté par extrapolation, pendant la phase de régime libre ($P_F$) de chaque opération de réglage, au regard des ondulations de courant (R) identifiées avant et/ou après la phase de régime libre ($P_F$).

7. Dispositif de réglage (1) pour un véhicule automobile, comprenant un moteur à courant continu (2) commuté mécaniquement, qui présente, grâce à une modification mécanique ou électromécanique, un modèle d'ondulations normal (29), qui englobe, par cycle du moteur ou demi-cycle (Z) du moteur, au moins une ondulation indicielle ($R_I$) remarquable quant à l'amplitude ($A_R$), à la durée et/ou à la localisation temporelle, le dispositif comprenant également une unité de commande (5) pour piloter le moteur à courant continu (2), l'unité de commande (5) étant configurée pour déterminer une grandeur de réglage du moteur (2), notamment la position de moteur ou le déplacement de réglage, conformément au procédé selon l'une des revendications 1 à 5.

8. Dispositif de réglage (1) selon la revendication 7, dans lequel le moteur à courant continu (2) présente un modèle d'ondulations normal (29), qui comporte exactement une ondulation indicielle ($R_I$) par cycle ou respectivement demi-cycle (Z) du moteur, ainsi qu'au moins trois ondulations de courant ($R_N$) non remarquables.

9. Utilisation d'un moteur à courant continu (2) commuté mécaniquement, qui présente, grâce à une modification mécanique ou électromécanique, un modèle d'ondulations normal (29), qui englobe, par cycle du moteur ou demi-cycle (Z) du moteur, au moins une ondulation indicielle ($R_I$) remarquable quant à l'amplitude ($A_R$), à la durée et/ou à la localisation temporelle, pour la correction d'erreurs de comptage lors de la détermination d'une grandeur de réglage (M) du moteur à courant continu (2) par comptage d'ondulations de courant (R), notamment conformément au procédé selon l'une des revendications 1 à 6.

FIG. 1

EP 2 409 396 B1

# FIG. 2

# FIG. 3

# FIG. 4

EP 2 409 396 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006049123 A1
- DE 202004010211 U1
- DE 4135873 C2